# EUROPÄISCHE PATENTSCHRIFT

(11) **EP 1 503 123 B1**
(45) Veröffentlichungstag und Bekanntmachung des Hinweises auf die Patenterteilung: **01.04.2009**
(21) Anmeldenummer: 04016482.4
(22) Anmeldetag: 13.07.2004
(51) Int. Cl.: F16K 43/00

(54) **Ventiloberteil**
Upper part of a valve
Partie supérieure de soupape

(30) Priorität: 01.08.2003 DE 10335995
(43) Veröffentlichungstag der Anmeldung: 02.02.2005
(73) Patentinhaber: Gebr. Kemper GmbH + Co. KG Metallwerke, 57462 Olpe (DE)
(72) Erfinder: Hilchenbach, Gerhard, 57462 Olpe (DE)
(74) Vertreter: Grünecker, Kinkeldey, Stockmair & Schwanhäusser Anwaltssozietät

(56) Entgegenhaltungen:
- US-A- 686 854
- US-A- 3 295 856
- US-A- 3 777 783
- US-A- 3 993 285
- US-A- 4 601 304
- US-A- 5 454 547

## Beschreibung

Die Erfindung betrifft ein Ventil gemäß dem Oberbegriff von Anspruch 1.

Ein Ventil gemäß dem Oberbegriff von Anspruch 1 ist aus der US 3,993,285 bekannt. Dieses gattungsgemäße Ventil zielt insbesondere darauf ab, eine zuverlässige Führung des Ventilkegels zu erreichen.

Ein aus der US 3,777,783 bekanntes Ventil zielt darauf ab, die unterschiedlichen Bauteile des Ventils zuverlässig miteinander zu verbinden.

US 5,454,547 stellt ein Ventil bereit, bei welchem das unkontrollierte Entweichen bzw. Eindringen von Wasser verhindert werden soll.

US 686,854 betrifft ein Ventil mit einer verbesserten Anordnung zum Öffnen und Schließen des Ventils.

Aus der US 3,295,856 ist ein Ventil bekannt, welches ein verbessertes Verdichten von Faserelementen ermöglichen soll.

Ein Ventiloberteil ist beispielsweise aus der DE 197 05 982 C1 bekannt. Dieses Ventiloberteil weist ein Dichtelement auf, das zwischen einer nicht-steigenden Spindel und einem Führungsring angeordnet ist. Als Antriebselement für die Spindel dient ein Handrad, das drehfest mit der Spindel verbunden ist. Die Spindel steht mit einem Stellelement in Gewindeeingriff, welches von dem Ventilschaft eines Ventilelementes gebildet wird. Durch Drehung des Handrades kann das Ventilelement in verschiedene Betriebstellung gestellt werden. In einer oberen Betriebstellung ist das Ventil maximal geöffnet und das Ventilelement weist einen maximalen Abstand zu einem Ventilsitz auf. Um das Ventil zu schließen, wird das Ventilelement in axialer Richtung durch Drehung des Handrades gegen den Ventilsitz geschoben. Die untere Betriebsstellung ist erreicht, wenn das Ventilelement an dem Ventilsitz anliegt.

Das Stellelement gemäß der DE 19 705 982 C1 ist durch den Ventilschaft nach Art eines Stößel gebildet. Als Stellelement im Sinne der vorliegenden Erfindung ist jedes Bauteil zu verstehen, welches mit dem Ventilelement verbunden und gegenüber dem Gehäuse axial verschiebbar ist. Das Stellelement kann aus einer steigenden oder nicht-steigenden Spindel oder als hydraulischer Stößel gebildet und kann auch ein- oder mehrteilig ausgebildet sein.

Die Dichtelemente von Ventiloberteilen werden üblicherweise aus elastischen Werkstoffen hergestellt. Diese Dichtelemente sind in der Regel wartungsfrei, müssen aber nach längerer Betriebsdauer ausgetauscht werden.

Das Dichtelement wird bei dem Stand der Technik von unten her in das Gehäuse eingesetzt, und so kann das Dichtelement nicht während des Betriebes des Ventiloberteils ausgetauscht werden. Um das Dichtelement auszutauschen, muss sichergestellt werden, dass das Ventiloberteil drucklos ist. Erst nachdem das Ventil außer Betrieb genommen ist kann das Ventiloberteil abgeschraubt werden um den Austausch des Dichtelementes zu ermöglichen.

Der vorliegenden Erfindung liegt das Problem zugrunde das gattungsgemäße Ventil so auszugestalten, dass eine gesundheitsschädliche Verkeimung des Wassers vermieden werden kann.

Das der Erfindung zugrundeliegende technische Problem wird durch ein Ventil mit dem Merkmalen von Anspruch 1 gelöst.

Die Austauschstellung ist dadurch gekennzeichnet, dass sich das Stellelement in einer bestimmten Position oberhalb der obersten Betriebstellung befindet. In der Austauschstellung ist ein beliebiges Dichtmittel wirksam, das das Stellelement gegenüber dem Gehäuseunterteil abdichtet. Das Gehäuse ist mehrteilig ausgeformt, um den Austausch des Dichtelementes während des Betriebes zu ermöglichen. Zum Austausch des Dichtelementes muss das Gehäuseoberteil von dem Gehäuseunterteil gelöst werden. Nachdem das Gehäuseoberteil gelöst worden ist, wird es in axialer Richtung abgezogen, so dass das Dichtelement für den direkten Zugriff frei liegt. In der Austauschstellung übernimmt das Dichtmittel die Funktion das Stellelement gegenüber dem Gehäuseunterteil abzudichten. Das Dichtelement kann deshalb, obwohl das Ventiloberteil unter Druck steht, problemlos ausgetauscht werden. Mit dem erfindungsgemäßen Ventiloberteil ist es daher möglich, das Dichtelement auch während des Betriebs, d.h. während das Ventiloberteil unter Druck steht, auszutauschen. Eine dauerhafte Betriebsicherheit kann damit gewährleistet werden.

Gemäß der Erfindung erfolgt die Durchströmung des Ventiloberteils bis an die Unterseite des Dichtelementes, so dass ein Totraum vermieden werden kann, in dem eine gesundheitsschädliche Verkeimung des Wassers zu befürchten ist.

Gemäß einer weiteren bevorzugten Weiterbildung des erfindungsgemäßen Ventiloberteils ist das Gehäuseoberteil von dem Gehäuseunterteil in Bewegungsrichtung des Stellelementes abziehbar und ein in einer oberen Betriebsstellung des Stellelementes wirksamer Mitnehmer ist vorgesehen, durch den das Stellelement mit dem Gehäuseoberteil in Bewegungsrichtung des Stellelementes gekoppelt ist. Der in der obersten Betriebstellung wirksame Mitnehmer kann beispielsweise als ein Zapfen oder ähnliches Element ausgebildet sein, durch welches eine Kopplung zwischen dem Stellelement und dem Gehäuseoberteil hergestellt wird. Das Stellelement wird durch eine axiale Bewegung, also eine Bewegung in Bewegungsrichtung des Stellelementes, in die oberste Betriebsstellung geschoben. Die oberste Betriebsstellung ist erst dann erreicht, wenn das Ventil eine maximale Öffnung aufweist. Wenn das Gehäuseoberteil von dem Gehäuseunterteil gelöst wird sorgt der Mitnehmer dafür, dass das Stellelement in axialer Richtung mitgezogen und weiter von dem Ventilsitz weg und in Richtung auf das Gehäuseunterteil hin bewegt wird. Der Vorteil eines derartigen Mitnehmers ist, dass eine zwangsläufige Kopplung hergestellt werden kann.

Gemäß einer weiteren bevorzugten Weiterbildung des erfindungsgemäßen Ventiloberteils ist der Mitnehmer durch den Eingriff eines Gewindes gebildet, durch welches das Stellelement und das Gehäuseoberteil im Gewindeeingriff gehalten sind. Der Vorteil dieser Weiterbildung ist, dass eine zwangsläufige Kopplung hergestellt wird, durch die das Stellelement nach Art einer steigenden Spindel mit dem Gehäuse zusammenwirkt.

Gemäß einer bevorzugten Weiterbildung des erfindungsgemäßen Ventiloberteils weist das Stellelement an seinem unteren Ende einen im Durchmesser vergrößerten Bereich auf und es sind in der Austauschstellung zwischen dem Stellelement und dem Gehäuseunterteil wirksame Positionier- und Dichtmittel vorgesehen.

Die Positionier- und Dichtmittel können sowohl in dem Gehäuseunterteil als auch in dem Stellelement aufgenommen sein. Als Positioniermittel ist jedes Bauteil zu verstehen, das in der Lage ist, eine bestimmte Position des Stellelementes relativ zu dem Gehäuseunterteil vorzugeben und/oder zu sichern. Der im Durchmesser vergrößerte Bereich weist einen Übergang zu einem im Durchmesser verringerten Bereich des Stellelementes auf. In einer beliebigen Betriebsstellung ist eine Durchströmung des Durchgangs bis zu dem im Durchmesser verringerten Bereich möglich, da der im Durchmesser vergrößerten Bereich mit Abstand zu dem Gehäuseunterteil in Richtung auf den Ventilsitz verschoben ist und Fluid auf der Rückseite des im Durchmesser vergrößerten Bereichs vorbei an dem im Durchmesser verringerten Bereich des Stellelementes zu dem Dichtelement gelangen kann. Bei einer Verschiebung des Stellelementes von der oberen Betriebsstellung in die Austauschstellung gibt das Positioniermittel die Austauschstellung vor. In der Austauschstellung sorgt das Dichtmittel dafür, dass beim Austausch des Dichtelementes das Stellelement gegenüber dem Gehäuseunterteil abgedichtet ist. In dieser Stellung ist eine Durchströmung des Durchgangs nicht möglich.

Gemäß einer bevorzugten Weiterbildung des erfindungsgemäßen Ventiloberteils ist das Positioniermittel durch ein Gewinde gebildet. Diese vorteilhafte Ausgestaltung des Positioniermittels gewährleistet eine sichere Austauschstellung.

Gemäß einer weiteren bevorzugten Weiterbildung des erfindungsgemäßen Ventiloberteils ist das Positioniermittel durch einen Sprengring gebildet, welcher in dem Gehäuseunterteil oder dem Stellelement aufgenommen ist und in der Austauschstellung in einer an dem Außenumfang des im Durchmesser vergrößerten Bereichs beziehungsweise dem Gehäuseunterteil ausgesparten Ringnut im Eingriff ist, deren eine Seitenfläche schräg die Ringnut radial vergrößernd ausgebildet ist. Das Positioniermittel kann in dem Gehäuseunterteil als auch in dem Stellelement aufgenommen sein. Sofern das Positioniermittel im Gehäuseunterteil aufgenommen ist, weist der Außenumfang des im Durchmesser vergrößerten Bereichs eine Ringnut auf, deren obere Seitenfläche schräg ausgebildet ist. Sollte aber der Sprengring in dem im Durchmesser vergrößerten Bereich des Stellelementes aufgenommen sein, so weist das Gehäuseunterteil eine Ringnut auf deren untere Seitenfläche schräg ausgebildet ist. Diese schräge Ausformung führt bei beiden Alternativen dazu, dass der Sprengring in radialer Richtung vorgespannt und aus der Ringnut geschoben wird, wenn das Stellelement von der Austauschstellung in eine beliebige Betriebsstellung verschoben wird.

Vorzugsweise umfasst das Dichtmittel einen zwischen dem Außenumfang des im Durchmesser vergrößerten Bereiches und dem Gehäuseunterteil vorgesehenen Dichtring. Der Dichtring gewährleistet eine sichere Abdichtung des Stellelementes gegenüber dem Gehäuseunterteil.

Gemäß einer weiteren bevorzugten Weiterbildung des erfindungsgemäßen Ventiloberteils umfasst das Positioniermittel einen benachbart zu dem Ventilelement ausgeformten Kragen, der in der Austauschstellung an dem Gehäuseunterteil anliegt. Der Kragen, der an dem unteren Ende des Stellelementes ausgebildet ist, gibt die Austauschstellung vor, in welcher der Kragen an dem Gehäuseunterteil anliegt, und stoppt die Bewegung des Stellelementes relativ zu dem Gehäuseunterteil bei einer Bewegung aus der oberen Betriebslellung in die Austauschstellung.

Vorzugsweise liegt der Kragen dichtend an, so dass der Kragen einerseits die Austauschstellung vorgibt und anderseits das Stellelement gegenüber dem Gehäuseunterteil abdichtet.

Gemäß einer weiteren bevorzugten Weiterbildung des erfindungsgemäßen Ventiloberteils liegt eine obere Kante des Kragens dichtend an einer dem Ventilelement zugewandten schrägen Fläche des Gehäuseunterteils an. Da die obere Kante des Kragens dichtend an der schrägen Fläche anliegt, ergibt sich zwischen dem Gehäuseunterteil und dem Kragen eine hohe Flächenpressung. Das Gehäuseunterteil und der Kragen werden üblicherweise aus Rotguss oder einer Messinglegierung hergestellt, so dass auf grund der hohen Flächenpressung das Stellelement gegenüber dem Gehäuseunterteil abgedichtet werden kann, ohne dass gesonderte, stofffremde Dichtmittel aus elastischen Materialien vorgesehen sein müssen. Die Abdichtung wird also nur durch für Armaturen übliche metallische Materialen erzeugt.

Gemäß einer bevorzugten Weiterbildung des erfindungsgemäßen Ventiloberteils wird das Stellelement und/oder das Gehäuseunterteil aus einem anderen Werkstoff als das Gehäuseoberteil hergestellt. Bei dieser bevorzugten Ausgestaltung können das Gehäuseoberteil und/oder das Stellelement aus einem verhältnismäßig hochwertigen, insbesondere den Anforderungen an die Korrosionsbeständigkeit genügenden Werkstoff gebildet sein, wohingegen bei der Auswahl des Werkstoffs für das Gehäuseoberteil derartige Anforderungen unberücksichtigt bleiben können. Ferner weist diese vorteilhafte Ausgestaltung den Vorteil auf, dass der Verschleiß im Bereich des Gewindeeingriffs zwischen dem Stellelement und dem Gehäuseoberteil gering gehalten werden kann, da bei unterschiedlichen Werkstoffpaarungen bei Bewegungsgewinden weniger Reibung an den Berührungsflächen erzeugt wird.

Weitere Einzelheiten, Vorteile und Merkmale der vorliegenden Erfindung ergeben sich aus der nachfolgenden Beschreibung einiger Ausführungsbeispiele in Verbindung mit der Zeichnung. In dieser zeigen:
- Fig. 1: eine Längsschnittansicht eines Ventils mit einem ersten Ausführungsbeispiel des erfindungsgemäßen Ventiloberteils;
- Fig. 2: eine Detailvergrößerung des in Figur 1 dargestellten Bereichs Z;
- Fig. 3: die in Figur 1 gezeigte Darstellung, wobei sich das erfindungsgemäße Ventiloberteil in der Austauschstellung befindet;
- Fig. 4: eine Detailvergrößerung des in Figur 3 dargestellten Bereichs V;
- Fig. 5: ein zweites Ausführungsbeispiel für den in Figur 4 dargestellten Bereich; und
- Fig. 6: ein drittes Ausführungsbeispiel für den in Figur 4 dargestellten Bereich.

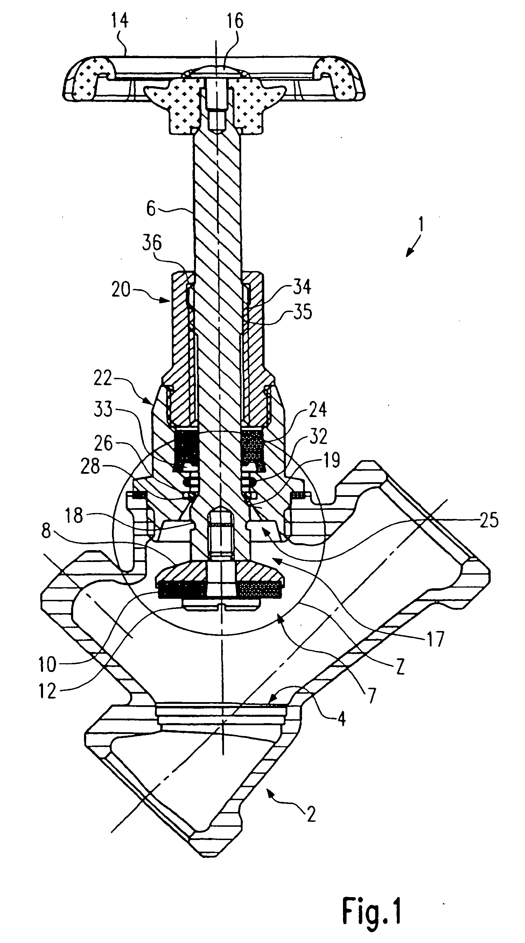

Figur 1 zeigt ein Absperrventil in Längsschnittdarstellung in dem das erfindungsgemäße Ventiloberteil 1 mit einem Ventilgehäuse 2 dichtend verschraubt ist. Das Ventilgehäuse 2 weist einen Einlass und einen Auslas auf, durch den das Wasser strömen kann. Diese Strömung kann durch das Anstellen des Ventiloberteils 1 gegen einen Ventilsitz 4 gedrosselt werden.

In dem Ventiloberteil 1 wird ein Stellelement, in Figur 1 als eine steigende Spindel 6 ausgebildet, geführt. An einem unteren Ende weist die Spindel 6 einen Spindelkopf 17 auf und trägt stirnseitig ein Ventilelement 7, das aus einem Ventilkegel 8 und einer Kegeldichtung 10 besteht. Der Ventilkegel 8 und die Kegeldichtung 10 sind durch eine Schraube 12 mit der Spindel 6 verbunden. An dem anderen, oberen Ende der Spindel 6 ist ein Handrad 14, ebenfalls mittels einer Schraube 16, mit der Spindel 6 verdrehfest verbunden. Zwischen dem Spindelkopf 17 und einem im Durchmesser gegenüber dem Durchmesser des Spindelkopfes 17 verringerten Bereich der Spindel 6, ist ein schräger Übergang 19 vorgesehen. An dem Außenumfang des Spindelkopfes 17 ist eine Ringnut 18 ausgespart, deren obere Seitenfläche schräg, zu dem Handrad 14 geneigt ausgebildet ist.

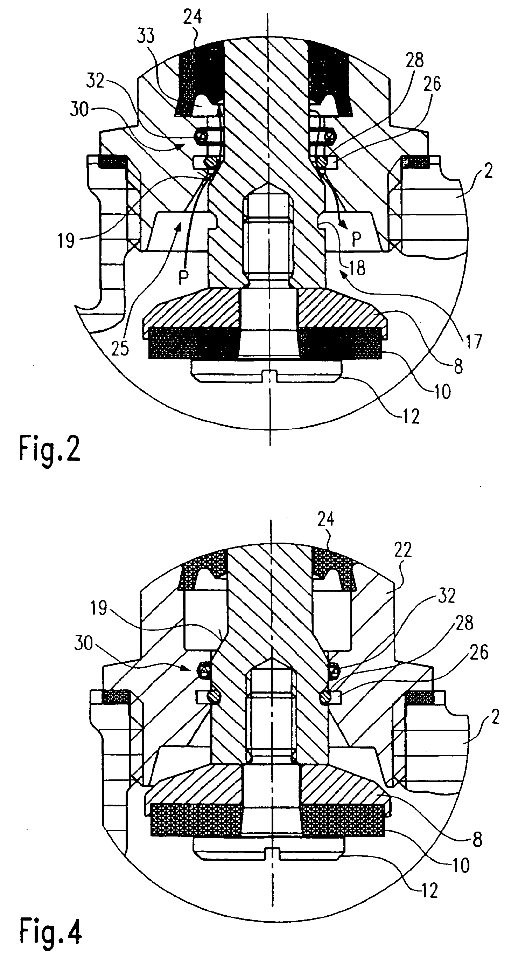

Das Gehäuse des Ventiloberteils 1 ist zweiteilig mit einen Gehäuseoberteil 20 und einen Gehäuseunterteil 22 ausgebildet. Zwischen dem Gehäuseoberteil 20 und dem Gehäuseunterteil 22 ist ein von der Spindel 6 durchragtes Dichtelement 24 angeordnet. In der Detailvergrößerung in Figur 2 ist zwischen der Spindel 6 und dem Gehäuseunterteil 22 ein von einem von dem Ventilgehäuse 2 umschlossenen Ventilraum bis an die Unterseite des Dichtelementes 24 reichender Durchgang 25 zu erkennen. In einer beliebigen Betriebsstellung ist eine Durchströmung des Durchganges 25 bis zu der Unterseite des Dichtelementes 24 möglich. Die Durchströmung erfolgt beispielsweise in Richtung des in Fig. 2 dargestellten Pfeils P. Eine stirnseitig dem Dichtelement vorgelagerte Kammer 33 wird dadurch durchströmt, und das Ventiloberteil ist deshalb totraumfrei. Die untere Hälfte der den Durchgang 25 umgebenden Wandung des Gehäuseunterteils 22 öffnet sich konisch, dem Ventilkegel 8 zugewandt. In der oberen Hälfte des Durchganges 25 weist das Gehäuseunterteil 22 eine rechteckige Nut 26 zur Aufnahme eines Positioniermittels in Form eines Sprengrings 28 und eine Nut 30 zur Aufnahme eines Dichtmittels in Form eines O-Rings 32 auf.

Die Spindel 6 hat in etwa in ihrer Mitte einen Gewindevorsprung 34, dessen oberes Ende sich in der in Figur 2 gezeigten oberen Betriebsstellung an einer Anschlagschulter 36 des Gehäuseoberteils 20 anliegt und welcher mit einem Innengewinde 35 des Gehäuseoberteils 20 im Eingriff ist. In der oberen Betriebsstellung der Spindel 6 ist das die Strömung beim Betrieb regulierende Ventilelement 8, 10 beim Betrieb des Ventiloberteils maximal von dem Ventilsitz 4 entfernt.

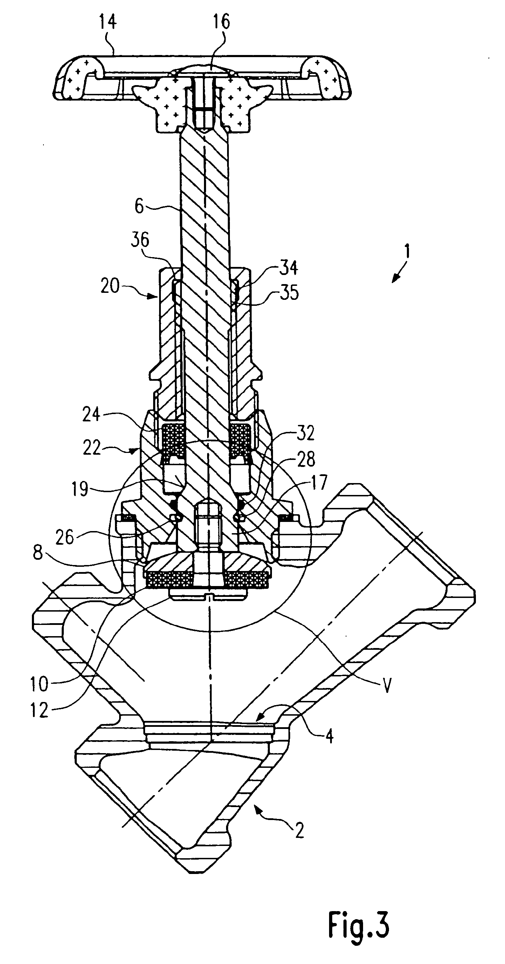

Um das Dichtelement 24 auszutauschen wird die Spindel 6 von der in Figur 1 gezeigten oberen Betriebsstellung der Spindel 6 in die in Figur 3 und 4 gezeigte Austauschstellung verschoben. Dies wird durch Abschrauben des Gehäuseoberteils 20 von dem Gehäuseunterteil 22 bewirkt. Die Spindel 6 ist durch den Gewindeeingriff zwangsläufig mit dem Gehäuseoberteil 20 verbunden und wird deshalb in axiale Richtung mitgezogen. In dieser axialen Bewegung gleitet zuerst der Sprengring 28 über den schrägen Übergang 19 und wird dadurch radial geweitet. Bei fortlaufender Verschiebung der Spindel wird der Sprengring 28 und auch der O-Ring 32 unter radialer Vorspannung an den Spindelkopf 17 angelegt. In dem Augenblick, in dem das Gehäuseoberteil 20 komplett von dem Gehäuseunterteil 22 abgeschraubt ist, rastet der Sprengring 28 in die Ringnut 18 ein und fixiert die Spindel 6 in Abschraubbewegung gegenüber dem Gehäuseunterteil 22 und der O-Ring 32 dichtet die Spindel 6 gegenüber dem Gehäuseunterteil 22 ab. Die Spindel 6 befindet sich nun in der Austauschstellung, siehe Figur 3 und 4. Bei forschreitender Abschraubbewegung wird das Gehäuseoberteil 20 komplett von der nun fixierten Spindel 6 gelöst. Nach dem Entfernen des Handrades 14 kann dann das Gehäuseoberteil 20 entfernt werden, so dass das Dichtelement 24 für den direkten Zugriff frei liegt. Nachdem das Dichtelement 24 ausgetauscht worden ist, erfolgt die Fertigmontage in umgekehrter Reihenfolge. Danach ist das Absperrventil wieder voll funktionsfähig. Wenn die Spindel 6 von der Austauschstellung in eine beliebige Betriebsstellung geschoben wird, gleitet der Sprengring 28 über die obere, zu dem Handrad 14 geneigte Seitenfläche der Ringnut 18 und wird so aus der Ringnut 18 gedrängt, wodurch die Fixierung der Spindel 6 gelöst wird.

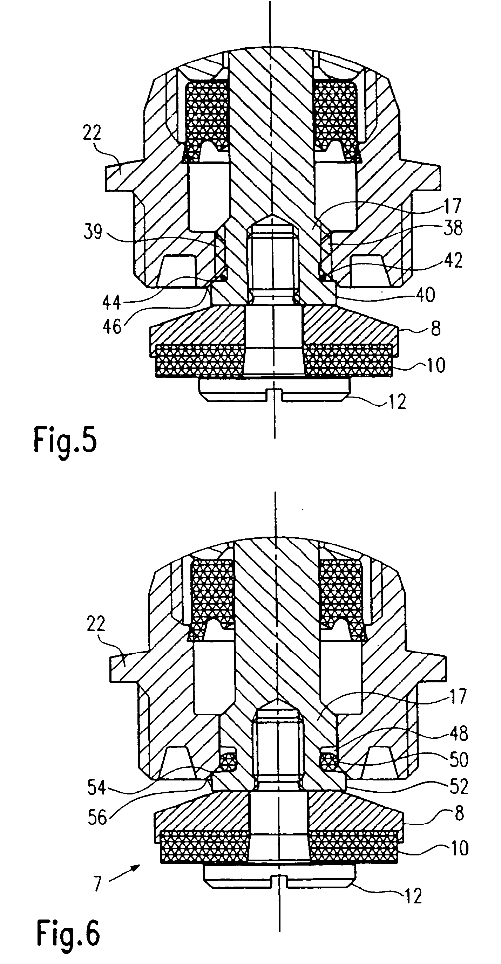

Figur 5 und 6 zeigen weitere Ausführungsbeispiele des in Figur 4 dargestellten Bereichs. In diesen Figuren sind gegenüber dem Ausführungsbeispiel der Figur 1 bis 4 gleiche Teile, mit den selben Bezugszeichen gekennzeichnet.

In Figur 5 weist der Spindelkopf 17 an seiner Außenumfangsfläche teilweise ein Gewinde 38 auf. Am unteren Ende des Spindelkopfes 17 ist ein Kragen 40, mit einen größeren Durchmesser als das Gewinde 38, ausgeformt. Der Kragen 40 ist durch eine Nut 42 von dem Gewinde 38 getrennt. Die Innenumfangsfläche des Gehäuseunterteils 22 weist ein Gegengewinde 39 zu dem Gewinde 38 auf. Dieses Gewinde 38, 39 muss für Montagezwecke mindestens so groß sein wie der Gewindevorsprung 34 der Spindel 6. Stirnseitig zu dem Spindelkopf 17 trägt die Spindel 6 den Ventilkegel 8 und die Kegeldichtung 10.

Um das Dichtelement 24 auszutauschen wird die Spindel 6 von einer oberen Betriebsstellung in die Austauschstellung geschraubt. Das Gewinde 38 greift bei fortschreitender Abschraubbewegung in das Gegengewinde 39 ein. Die Spindel 6 wird zur Einstellung der Austauschstellung so lange zurückgeschraubt, bis eine obere Kante 44 des Kragens 40 an einer dem Ventilkegel 8 zugewandten Fläche 46 des Gehäuseunterteils 22 anliegt. Diese umlaufende Kante 44 gibt einerseits die Austauschstellung vor und sorgt anderseits dafür, dass die Spindel 6 gegenüber dem Gehäuseunterteil 22 abgedichtet ist. Danach wird das Gehäuseoberteil 20 durch weiteres Drehen zwangsläufig von der Spindel 6 abgeschraubt die verdrehfest gegenüber dem Gehäuseunterteil 22 gehalten ist.

In Figur 6 ist ein weiteres Ausführungsbeispiel des im Figur 4 vergrößerten Bereichs dargestellt. In diesem Ausführungsbeispiel ist eine Ringnut 48 in dem Spindelkopf 17 ausgespart. Die Ringnut 48 nimmt einen O-Ring 50 auf. Am unteren Ende des Spindelkopfes 17 ist ein Kragen 52 ausgeformt, dessen Durchmesser größer ist als der des Spindelkopfes 17. Stirnseitig des Spindelkopfes 17 trägt die Spindel 6 das Ventilelement 7.

Die Spindel 6 wird von einer oberen Betriebstellung in die Austauschstellung durch Abschrauben des Gehäuseoberteils 20 gegenüber den Gehäuseunterteil 22 verlagert, so dass das Dichtelement 24 ausgetauscht werden kann. Die Spindel 6 wird solange in axiale Richtung geschoben, bis eine obere Kante 54 des Kragens 52 an einer dem Ventilkegel 8 zugewandten schrägen Fläche 56 des Gehäuseunterteils 22 anschlägt und dadurch die Austauschstellung vorgibt. Eine mechanische Verriegelung der Spindel 6 ist im diesem Ausführungsbeispiel nicht nötig, da der Druck des Mediums die Spindel 6 in dieser Stellung hält. In dieser Austauschstellung sorgt der O-Ring 50 dafür, dass die Spindel 6 gegenüber dem Gehäuseunterteil 22 abgedichtet ist.

### Bezugszeichenliste

- 1: Ventiloberteil
- 2: Ventilgehäuse
- 4: Ventilsitz
- 6: Spindel
- 7: Ventilelement
- 8: Ventilkegel
- 10: Kegeldichtung
- 12: Schraube
- 14: Handrad
- 16: Schraube
- 17: Spindelkopf
- 18: Ringnut
- 19: Übergang
- 20: Gehäuseoberteil
- 22: Gehäuseunterteil
- 24: Dichtelement
- 25: Durchgang
- 26: Nut
- 28: Sprengring
- 30: Nut
- 32: O-Ring
- 33: Kammer
- 34: Gewindevorsprung
- 35: Innengewinde
- 36: Anschlagschulter
- 38: Gewinde
- 39: Gewinde
- 40: Kragen
- 42: Nut
- 44: Kante
- 46: Fläche
- 48: Ringnut
- 50: O-Ring
- 52: Kragen
- 54: Kante
- 56: Fläche

## Patentansprüche

1. Ventil mit einem einen Einlass und einen Auslass für das Medium bildenden Ventilgehäuse (2) und einem Ventiloberteil (1), das dichtend mit dem Ventilgehäuse (2) verbunden ist und das ein Gehäuse aufweist, in dem ein Stellelement (6) geführt ist, das an einem unteren, das Gehäuse überragenden Ende ein Ventilelement (7) trägt, in dem ein von dem Stellelement (6) durchragtes Dichtelement (24) aufgenommen ist und das ein mit einem Ventilgehäuse (2) dichtend verbindbares Gehäuseunterteil (22) aufweist, mit dem ein Gehäuseoberteil (20) lösbar verbunden ist, und wobei das Dichtelement (24) zwischen dem Gehäuseunterteil (22) und dem Gehäuseoberteil (20) angeordnet ist, wobei das Stellelement (6) und das Gehäuseoberteil (20) über eine Gewindeverbindung miteinander in Wirkverbindung stehen, wobei das Ventilelement (7) in einer unteren Betriebsstellung zum Schließen des Ventils dichtend an einen an dem Ventilgehäuse (2) ausgebildeten Ventilsitz (4) zur Anlage bringbar ist,
**gekennzeichnet durch**
eine stirnseitig dem Dichtelement (24) vorgelagerte Kammer (33), und einen Durchgang (25), der in jeder beliebigen Betriebsstellung des Stellelementes eine Durchströmung von in dem Ventil geführten Medium in die Kammer (33) bis an die Stirnseite des Dichtelementes (24) ermöglicht, wobei in einer Austauschstellung, in der sich das Ventilelement (7) nahe des Gehäuseunterteils (22) befindet, das Stellelement (6) gegenüber dem Gehäuseunterteil (22) zwischen dem Dichtelement (24) und dem Ventilelement (7) abgedichtet ist.

2. Ventil nach Anspruch 1, **dadurch gekennzeichnet, dass** das Gehäuseoberteil (20) von dem Gehäuseunterteil (22) in Bewegungsrichtung des Stellelementes (6) abziehbar ist und dass ein in einer oberen Betriebsstellung des Stellelementes (6) wirksamer Mitnehmer (34) vorgesehen ist, durch den das Stellelement (6) mit dem Gehäuseoberteil (20) in Bewegungsrichtung des Stellelementes (6) gekoppelt ist.

3. Ventil nach Anspruch 2, **dadurch gekennzeichnet, dass** der Mitnehmer durch den Eingriff eines Gewindes gebildet ist, durch welches das Stellelement (6) und das Gehäuseoberteil (20) im Gewindeeingriff gehalten sind.

4. Ventil nach einem der vorhergehenden Ansprüche, **dadurch gekennzeichnet, dass** das Stellelement (6) an seinem unteren Ende einen im Durchmesser vergrößerten Bereich (17) aufweist und dass in dem im Durchmesser vergrößerten Bereich (17) in der Austauschstellung zwischen dem Stellelement (6) und dem Gehäuseunterteil (22) wirksame Positionier- und Dichtmittel (28; 32) vorgesehen sind.

5. Ventil nach Anspruch 4, **dadurch gekennzeichnet, dass** das Positioniermittel durch ein Gewinde (38, 39) gebildet ist.

6. Ventil nach Anspruch 4, **dadurch gekennzeichnet, dass** das Positioniermittel durch einen Sprengring (28) gebildet ist, welcher in dem Gehäuseunterteil (22) oder dem Stellelement (6) aufgenommen ist und in der Austauschstellung in einer an dem Außenumfang des im Durchmesser vergrößerten Bereichs (17) beziehungsweise dem Gehäuseunterteil (22) ausgesparten Ringnut (18) im Eingriff ist, deren eine Seitenfläche schräg die Ringnut (18) radial vergrößernd ausgebildet ist.

7. Ventil nach einem der Ansprüche 4 bis 6, **dadurch gekennzeichnet, dass** das Dichtmittel (32) einen zwischen dem Außenumfang des im Durchmesser vergrößerten Bereiches (17) und dem Gehäuseunterteil (22) vorgesehenen Dichtring (32) umfasst.

8. Ventil nach einem der vorhergehenden Ansprüche, **dadurch gekennzeichnet, dass** das Positioniermittel einen benachbart zu dem Ventilelement (7) ausgeformten Kragen (40; 52) umfasst, der in der Austauschstellung an dem Gehäuseunterteil (22) anliegt.

9. Ventil nach Anspruch 8, **dadurch gekennzeichnet, dass** der Kragen (40) dichtend anliegt.

10. Ventil nach Anspruch 8, **dadurch gekennzeichnet, dass** eine obere Kante (44; 54) des Kragens (40) dichtend an einer dem Ventilelement (7) zugewandten schrägen Fläche (46; 56) des Gehäuseunterteils (22) anliegt.

11. Ventil nach einem der vorhergehenden Ansprüche, **dadurch gekennzeichnet, dass** das Stellelement (6) und/oder das Gehäuseunterteil (22) aus einem anderen Werkstoff als das Gehäuseoberteil (20) hergestellt ist/sind.

12. Ventil nach einem der vorhergehenden Ansprüche, **dadurch gekennzeichnet, dass** das Stellelement (6) und/oder das Gehäuseunterteil (22) aus Rotguss oder Edelstahl hergestellt ist/sind, und dass das Gehäuseoberteil (20) aus Messing hergestellt ist.

## Claims

1. Valve having a valve housing (2) forming an inlet and an outlet for the medium, and a valve upper part (1) which is sealingly connected to the valve housing (2) and comprises a housing, in which an actuating element (6) is guided, which supports on a lower end, protruding beyond the housing, a valve element (7), in which a sealing element (24), through which the actuating element (6) extends, is accomodated and which comprises a housing lower part (22) which can be sealingly connected to a valve housing (2) and to which a housing upper part (20) is detachably connected, and wherein the sealing element (24) is disposed between the housing lower part (22) and the housing upper part (20), wherein the actuating element (6) and the housing upper part (20) are operatively connected to each other via a threaded connection, wherein in order to close the valve the valve element (7) can be moved in a lower operating position so as to lie in a sealing manner against a valve seat (4), which is formed on the valve housing (2),
**characterised by** a chamber (33) which on the end side is disposed upstream of the sealing element (24), and a passage (25) which in any operating position of the actuating element allows the medium guided in the valve to flow through into the chamber (33) to the end side of the sealing element (24), wherein in a replacement position, in which the valve element (7) is located close to the housing lower part (22), the actuating element (6) is sealed with respect to the housing lower part (22) between the sealing element (24) and the valve element (7).

2. Valve according to claim 1, **characterised in that** the housing upper part (20) can be removed from the housing lower part (22) in the direction of movement of the actuating element (6) and that there is provided a carrier (34) which is effective in an upper operating position of the actuating element (6) and by means of which the actuating element (6) is coupled to the housing upper part (20) in the direction of movement of the actuating element (6).

3. Valve according to claim 2, **characterised in that** the carrier is formed by the engagement of a thread, by means of which the actuating element (6) and the housing upper part (20) are held in threaded engagement.

4. Valve according to any one of the preceding claims, **characterised in that** the actuating element (6) comprises at its lower end an enlarged diameter region (17) and that in the enlarged diameter region (17) in the replacement position positioning and sealing means (28; 32) are provided which are effective between the actuating element (6) and the housing lower part (22).

5. Valve according to claim 4, **characterised in that** the positioning means is formed by means of a thread (38, 39).

6. Valve according to claim 4, **characterised in that** the positioning means is formed by means of a snap ring (28) which is accommodated in the housing lower part (22) or the actuating element (6) and in the replacement position is in engagement in an annular groove (18) which is recessed on the outer periphery of the enlarged diameter region (17) or on the housing lower part (22) and whose one lateral surface is formed obliquely in such a manner as to enlarge the annular groove (18) radially.

7. Valve according to any one of claims 4 to 6, **characterised in that t**he sealing means (32) comprises a sealing ring (32) which is provided between the outer periphery of the enlarged diameter region (17) and the housing lower part (22).

8. Valve according to any one of the preceding claims, **characterised in that** the positioning means comprises a collar (40; 52) which is formed adjacent to the valve element (7) and which in the replacement position lies against the housing lower part (22).

9. Valve according to claim 8, **characterised in that** the collar (40) lies in position in a sealing manner.

10. Valve according to claim 8, **characterised in that** an upper edge (44; 54) of the collar (40) lies in a sealing manner against an oblique surface (46; 56) of the housing lower part (22) which faces the valve element (7).

11. Valve according to any one of the preceding claims, **characterised in that** the actuating element (6) and/or the housing lower part (22) is/are produced from a different material than the housing upper part (20).

12. Valve according to any one of the preceding claims, **characterised in that** the actuating element (6) and/or the housing lower part (22) is/are produced from red bronze or high-quality steel, and that the housing upper part (20) is produced from brass.

## Revendications

1. Soupape avec carter de soupape (2) formant une admission et un échappement pour le fluide et avec une partie supérieure de soupape (1), reliée de manière étanche au carter de soupape (2) et qui présente un carter, dans lequel un élément de réglage (6) est conduit, lequel porte sur une extrémité inférieure dépassant le carter, un élément de soupape (7), dans lequel un élément d'étanchéité (24) traversé par l'élément de réglage (6) est logé et qui présente une partie inférieure de carter (22) reliable de manière étanche à un carter de soupape (2), avec lequel une partie supérieure de carter (20) est relié de manière amovible, et où l'élément d'étanchéité (24) est agencé entre la partie inférieure de carter (22) et la partie supérieure de carter (20), l'élément de réglage (6) et la partie supérieure de carter (20) étant en liaison fonctionnelle l'un avec l'autre par un raccord fileté, l'élément de soupape (7) pouvant être mis en position dans une position de service inférieure pour la fermeture de la soupape et ce, de manière étanche sur un siège de soupape (4) configuré sur le carter de soupape (2),
**caractérisée en ce que**
une chambre (33) placée frontalement à l'élément d'étanchéité (24) et un passage (25) qui permet, dans une quelconque position de service de l'élément de réglage, un flux dans la chambre (33), du fluide conduit dans la soupape, jusqu'au côté avant de l'élément d'étanchéité (24), dans une position de changement, dans laquelle se trouve l'élément de soupape (7) près de la partie inférieure de carter (22), l'élément de réglage (6) étant rendu étanche par rapport à la partie inférieure de carter (22) entre l'élément d'étanchéité (24) et l'élément de soupape (7).

2. Soupape selon la revendication 1, **caractérisée en ce que** la partie supérieure de carter (20) peut être démontée de la partie inférieure de carter (22) dans le sens du mouvement de l'élément de réglage (6) et **en ce qu'**un organe d'entraînement (34) actif dans une position supérieure de service de l'élément de réglage (6) est prévu au moyen duquel l'élément de réglage (6) est couplé avec la partie supérieure de carter (20) dans le sens de mouvement de l'élément de réglage (6).

3. Soupape selon la revendication 2, **caractérisée en ce que** l'organe d'entraînement est formé par la prise d'un filetage par le moyen duquel l'élément de réglage (6) et la partie supérieure de carter (20) sont maintenus en prise filetée.

4. Soupape selon l'une des revendications précédentes, **caractérisée en ce que** l'élément de réglage (6) présente sur son extrémité inférieure, une zone (17) de diamètre agrandi et **en ce que** dans la zone (17) de diamètre agrandi, des moyens mettant en oeuvre le positionnement et l'étanchéité (28;32) sont prévus dans la position de changement entre l'élément de réglage (6) et la partie inférieure de carter (22).

5. Soupape selon la revendication 4, **caractérisée en ce que** le moyen de positionnement est formé par un filetage (38, 39).

6. Soupape selon la revendication 4, **caractérisée en ce que** le moyen de positionnement est formé par une rondelle Grower (28), laquelle est logée dans la partie inférieure de carter (22) ou l'élément de réglage (6) et est en prise dans la position de changement dans une rainure annulaire (18) évidée sur le pourtour extérieur de la zone de diamètre agrandi (17) ou, selon le cas, dans la partie inférieure de carter (22), dont une surface latérale est conçue en croissance radiale en oblique de la rainure annulaire (18).

7. Soupape selon l'une des revendications 4 à 6, **caractérisé en ce que** le moyen d'étanchéité (32) comprend une bague d'étanchéité (32) prévue entre le pourtour extérieur de la zone de diamètre agrandi (17) et la partie inférieure de carter (22).

8. Soupape selon l'une des revendications précédentes, **caractérisée en ce que** le moyen de positionnement comprend une collerette (40; 52) voisine de l'élément de soupape (7) située dans la position de changement sur la partie inférieure de carter (22).

9. Soupape selon la revendication 8, **caractérisée en ce que** la collerette (40) est adjacente et étanche.

10. Soupape selon la revendication 8, **caractérisée en ce qu'**une arête supérieure (44; 54) de la collerette (40) est située adjacente et étanche sur une surface (46 ; 56) de la partie inférieure de carter (22) qui est oblique et tournée vers l'élément de soupape (7).

11. Soupape selon l'une des revendications précédentes, **caractérisée en ce que** l'élément de réglage (6) et/ou la partie inférieure de carter (22) est/sont fabriqués d'un autre matériau que la partie supérieure de carter (20).

12. Soupape selon l'une des revendications précédentes, **caractérisée en ce que** l'élément de réglage (6) et/ou la partie inférieure de carter (22) est/sont fabriqués en bronze rouge ou acier noble et **en ce que** la partie supérieure de carter (20) est fabriquée en laiton.
